# EUROPÄISCHE PATENTSCHRIFT

(11) **EP 0 900 585 B1**
(45) Veröffentlichungstag und Bekanntmachung des Hinweises auf die Patenterteilung: **15.01.2003**
(21) Anmeldenummer: 98115673.0
(22) Anmeldetag: 20.08.1998
(51) Int. Cl.: B01D 46/42, B01D 46/52, B60H 3/06

(54) **Filtereinrichtung**
Filtering device
Dispositif de filtration

(30) Priorität: 06.09.1997 DE 19739014
(43) Veröffentlichungstag der Anmeldung: 10.03.1999
(73) Patentinhaber: MAHLE Filtersysteme GmbH, 70376 Stuttgart (DE)
(72) Erfinder: Schneider, Horst, 71336 Waiblingen (DE); Waibel, Hans, 71686 Remseck/Aldingen (DE)
(74) Vertreter: Patentanwalts-Partnerschaft, Rotermund + Pfusch + Bernhard

(56) Entgegenhaltungen:
- DE-A- 3 916 544
- DE-A- 19 524 677
- DE-C- 4 234 047
- FR-A- 2 741 568

## Beschreibung

Die Erfindung betrifft eine Filtereinrichtung, insbesondere für einen Fahrzeugkabinen-Luftfilter, nach dem Oberbegriff des Anspruches 1.

Eine derartige Filtereinrichtung ist aus der EP 0 705 634 A1 bekannt. Das Filterelement der Filtereinrichtung besteht aus zick-zack-förmig gefaltetem Bahnenmaterial. Die Längsseiten des Filterelements sind von einem Dichtstreifen abgedeckt, der die V-förmigen Stirnseiten der einzelnen benachbarten Zick-Zack-Falten verschließt und Fehlluftströme seitlich zur Durchströmrichtung der zu filternden Luft verhindert.

Eine Längskante des Dichtstreifens ragt über das Oberflächenniveau des Filterelements hinaus und ist in Form einer Rolldichtung umgebogen. Diese Rolldichtung greift in eine konkave Wölbung des Filtergehäuses ein, um so einen strömungsdichten Abschluß zu erhalten.

Der zu der Rolldichtung umgebogene Bereich kann einreißen oder brechen, denn der Dichtstreifen besteht aus einem nur begrenzt elastischen Material. Fehlluftströme und eine verminderte Reinigungsleistung des Filterelements können die Folge sein. Außerdem erfordert das Umbiegen zur Rolldichtung einen hohen Fertigungsaufwand.

Der Erfindung liegt das Problem zugrunde, eine gattungsgemäße Filtereinrichtung mit einfachen Mitteln über eine lange Betriebsdauer strömungsdicht auszubilden.

Dieses Problem wird erfindungsgemäß mit den Merkmalen des Anspruches 1 gelöst.

Die Aufnahmenut im Halterahmen ermöglicht durch Einstecken des Dichtstreifens eine einfache und schnelle Montage des Filterelements im Gehäuse bei zugleich hoher Dichtigkeit. Auch ein Wechsel eines bereits eingebauten Filters kann problemlos mit geringem Aufwand durchgeführt werden. Eine zusätzliche Bearbeitung der Längskante des Dichtstreifens kann entfallen.

Der Dichtstreifen kann - insbesondere bei einer rechteckförmigen Gestalt des Filterelements - an beiden Längsseiten und zusätzlich auch an den Stirnseiten des Filterelements angeordnet sein, um an allen Seiten einen strömungsdichten Abschluß zwischen dem Filterelement und dem Halterahmen bei erleichterter Montage zu erreichen.

Der Halterahmen ist entweder als eigenständiges, vom Gehäuse lösbares Bauteil ausgebildet oder kann auch einteilig mit dem Gehäuse ausgebildet sein. Im Fall eines gehäusefesten Halterahmens wird das Filterelement zweckmäßig nach Art einer Schublade eingeschoben bzw. herausgezogen. Das Filterelement kann aber auch von oben in den Halterahmen eingesetzt und mit der Längskante des Dichtstreifens in die Aufnahmenut eingesteckt werden; dies gilt sowohl für einen lösbaren als auch für einen gehäusefesten Halterahmen.

Zweckmäßig ist an zumindest einer Stirnseite des Filterelements eine Verschlußleiste vorgesehen, die vorteilhaft aus einem biege- und torsionssteifen Kunststoff besteht, um dem Filterelement an der Stirnseite, die keine Kräfte in Längsrichtung aufnehmen kann, Stabilität zu verleihen. Die Verschlußleiste kann mit dem Halterahmen auch ein gemeinsames Bauteil bilden, um auf diese Weise die Anzahl einzelner, zu montierender Teile zu reduzieren, oder gemäß einer weiteren zweckmäßigen Ausführung als Einzelteil direkt auf eine Filterfalte des Filterelements aufgesteckt sein.

An der Verschlußleiste ist bevorzugt ein Quersteg angeformt, wobei zwischen dem Quersteg und der Wandung der Verschlußleiste eine Nut gebildet ist, in die eine Filterfalte des Filters nach Art einer Labyrinthdichtung aufgenommen ist.

Weitere Vorteile und zweckmäßige Ausführungsformen sind den weiteren Ansprüchen, der Figurenbeschreibung und den Zeichnungen zu entnehmen. Es zeigen
- Fig. 1: einen Längsschnitt durch das Filterelement mit Halterahmen,
- Fig. 2: einen Schnitt nach Linie II-II aus Fig. 1,
- Fig. 3: eine Draufsicht auf den Halterahmen,
- Fig. 4: eine Seitenansicht des Halterahmens in der rechten Hälfte und einen Schnitt nach Linie IV-IV in Fig. 3 in der linken Hälfte,
- Fig. 5: einen Schnitt nach Linie V-V aus Fig. 4,
- Fig. 6: eine vergrößerte Darstellung des Details VI aus Fig. 5.

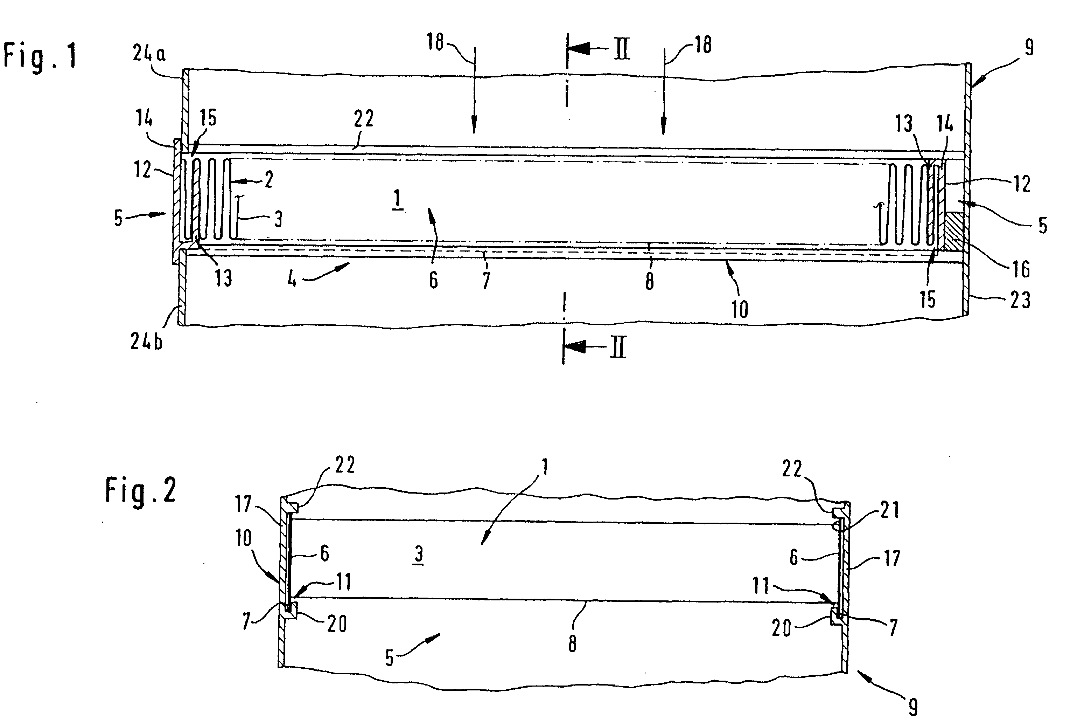

Das in Fig. 1 und 2 gezeigte Filterelement 1 ist aus zick-zack-förmig gefaltetem Bahnenmaterial 2 mit aneinandergereihten Filterfalten 3 aufgebaut. Das Bahnenmaterial 2 besteht aus einem luftdurchlässigen, aufschmelzbaren Kunststoffvlies, beispielsweise aus einem Thermoplast. An beiden Längsseiten 4 des Filterelements 1 ist ein verstärkter Dichtstreifen 6 aufgeklebt oder aufgeschmolzen, der ebenfalls aus einem Kunststoffvlies besteht, jedoch eine größere Wandstärke und eine größere Stabilität als das Bahnenmaterial des Filters aufweist. Das Filterelement 1 wird als Fahrzeugkabinen-Luftfilter in Kraftfahrzeugen eingesetzt und von der zu reinigenden Luft in Strömungsrichtung 18 durchströmt. Die Dichtstreifen 6 verhindern Fehlluftströme und verleihen dem Filterelement 1 zusätzliche Stabilität.

Das Filterelement 1 ist in einem Halterahmen 10 aufgenommen, der in einem Filtergehäuse 9 angeordnet ist. In der in Fig. 1 und 2 gezeigten Ausführung ist der Halterahmen 10 einteilig mit dem Filtergehäuse 9 ausgebildet.

Wie Fig. 2 zu entnehmen, umfaßt der Halterahmen 10 Seitenwände 17 mit je einer Aufnahmenut 11. Die Aufnahmenut 11 ist auf der einen Seite durch die Innenseite der Seitenwand 17 und auf der anderen Seite durch einen Steg 20, der am Boden 19 ausgebildet ist, begrenzt. In die Aufnahmenut 11 ist der Dichtstreifen 6 eingesteckt. Der Dichtstreifen 6 hat eine größere Bauhöhe als das Bahnenmaterial 2 des Filterelements 1, so daß eine Längskante 7 des Dichtstreifens 6 das Niveau der nach unten gerichteten Oberfläche 8 des Filterelements überragt. Die Längskante 7 des Dichtstreifens 6 kann dadurch ohne Behinderung durch das Bahnenmaterial 2 in die Aufnahmenut 11 eingesteckt werden; die Aufnahmenut 11 und der mit seiner Längskante 7 eingreifende Dichtstreifen 6 bilden eine Labyrinthdichtung. Die Aufnahmenut 11 hat einen rechteckförmigen Querschnitt, wobei die Breite der Aufnahmenut 11 zweckmäßig so bemessen ist, daß die einragende Längskante 7 des Dichtstreifens 6 mit Reibschluß strömungsdicht in der Nut festsitzt. Die Aufnahmenut 11 kann aber auch einen trapezförmigen, sich verjüngenden Querschnitt aufweisen, in den die Längskante 7 eingesteckt wird. Die Aufnahmenut 11 erstreckt sich im wesentlichen über die gesamte Länge des Filterelements 1.

Die entgegengesetzte Längskante 21 des Dichtstreifens 6 ist von einem Klemmsteg 22, der an jeder Seitenwand 17 des Halterahmens 10 verläuft, eingeklemmt. Der Klemmsteg 22 verhindert, daß das Filterelement 1 sich beispielsweise infolge von Fahrzeugschwingungen unbeabsichtigt aus seiner Einbaulage löst. Der Klemmsteg 22 bildet zusammen mit der Aufnahmenut 11 eine Zwangsführung nach Art einer Schublade für den Einschub bzw. das Herausnehmen des Filterelements 1 aus dem gehäusefesten Halterahmen 10.

An bevorzugt beiden Stirnseiten 5 des Filterelements 1 sind Verschlußleisten 12 aus biege- und torsionssteifem Kunststoff vorgesehen, die sich über die Breite des Filterelements erstrecken. Jede Verschlußleiste 12 besteht aus einer Wandung 14 und daran angeformtem Quersteg 13, zwischen denen eine Nut 15 zur Aufnahme einer oder mehrerer endseitiger Filterfalten 3 des Filterelements ausgebildet ist. Die Verschlußleisten 12 sorgen für einen strömungsdichten Abschluß im Bereich der Stirnseiten 5 des Filterelements. Die Nut 15 der Verschlußleiste 12 bildet hierbei eine Labyrinthdichtung.

Die Verschlußleisten 12 sind als eigenständige, vom Halterahmen 10 unabhängige Bauteile ausgebildet, wobei die beiden, an den jeweiligen Stirnseiten 5 angeordneten Verschlußleisten sich geringfügig voneinander unterscheiden können. Die in Fig. 1 rechts angeordnete, innere Verschlußleiste 12 befindet sich auf der der Einschuböffnung im Filtergehäuse gegenüberliegenden Seite und hat etwa die gleiche Bauhöhe wie das Filterelement 1, um ungehindert in das Gehäuse eingeschoben werden zu können. Zwischen der äußeren Wandung 14 der Verschlußleiste 12 und der hinteren Gehäusewand 23 ist eine Dichtung 16 angeordnet, um zwischen dem Filterelement 1 und dem Gehäuse 9 einen strömungsdichten Abschluß zu schaffen. Die Dichtung 16 kann entweder an der Außenseite der Wandung 14 der Verschlußleiste 12 oder an der Innenseite der Gehäusewand 23 befestigt sein.

Die im Bereich der Einschuböffnung angeordnete äußere Verschlußleiste 12 weist eine das Filterelement 1 übersteigende Bauhöhe auf, so daß der obere und untere Abschnitt der Wandung 14 an den vorderen Gehäusewandabschnitten 24a, b anliegt. Zwischen der Wandung 14 und den Gehäusewandabschnitten 24a, b können weitere Dichtelemente angeordnet sein. Weiterhin können an den Gehäusewandabschnitten 24a, b Klemmnasen vorgesehen sein, um die äußere Verschlußleiste und damit auch das Filterelement 1 nach Art eines Schnappverschlusses horizontal und vertikal festzuklemmen.

Gemäß einer weiteren Ausführung können die Verschlußleisten 12 zumindest im Bereich einer Stirnseite auch einteilig mit dem Halterahmen 10 ausgebildet sein. In diesem Fall wird das Filterelement von oben in den Halterahmen eingesetzt.

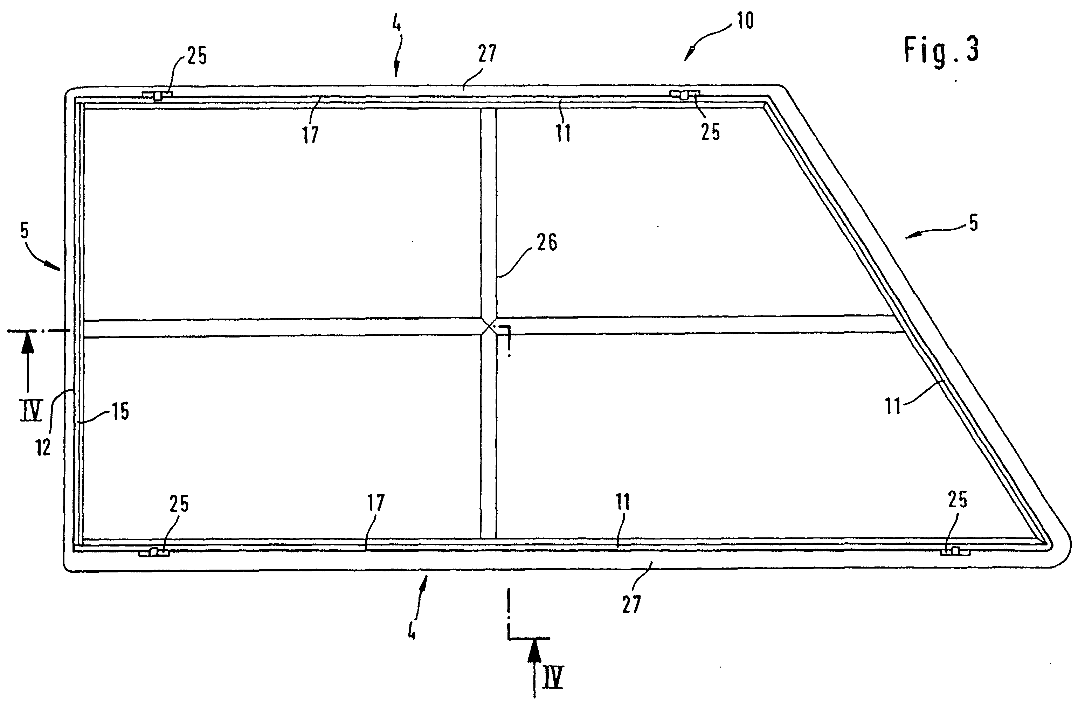

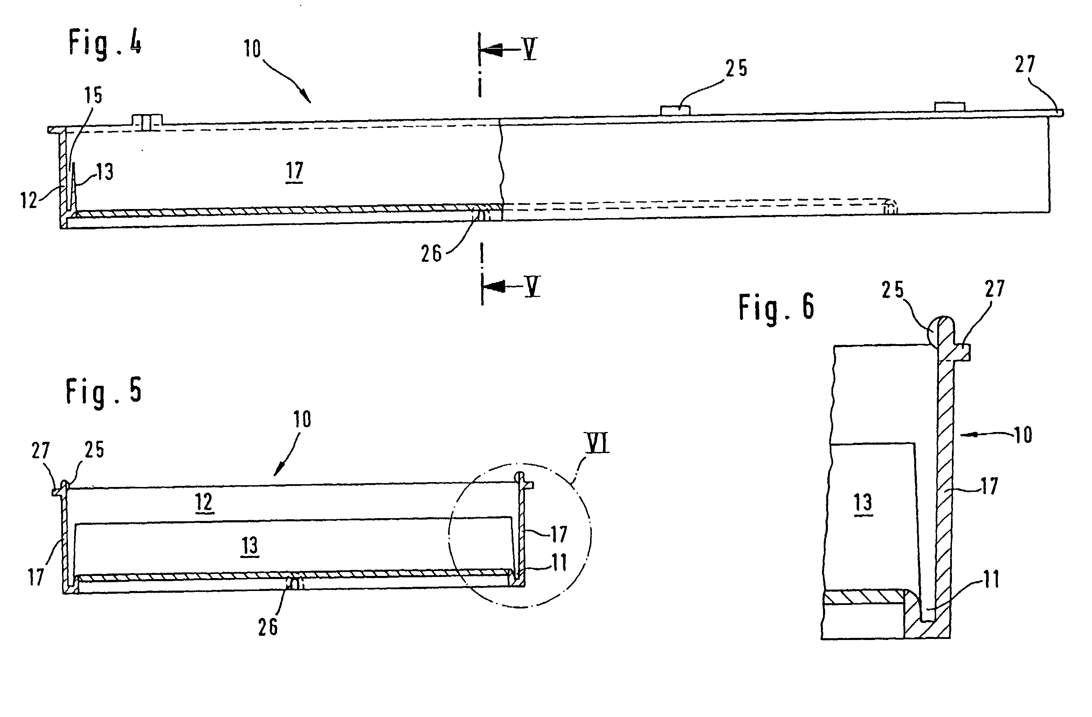

Die Fig. 3 bis 6 zeigen den Halterahmen 10 in einer anderen Ausführung. Der Halterahmen 10 ist als ein vom Filtergehäuse lösbares Bauteil ausgebildet und weist eine abgeschrägte Stirnseite 5 auf. Im Bereich der abgeschrägten Stirnseite 5 ist ebenso wie an den Längsseiten eine Aufnahmenut 11 vorgesehen; dementsprechend weist das aufzunehmende Filterelement sowohl an beiden Längsseiten als auch an der abgeschrägten Stirnseite jeweils einen Dichtstreifen auf, dessen Längskante in die Aufnahmenut einsteckbar ist. Im Bereich der geraden Stirnseite 5 ist einteilig mit dem Halterahmen eine Abschlußleiste 12 mit dazugehörendem Quersteg 13 ausgebildet. Der Halterahmen 10 weist entlang seiner Längsseiten 4 Seitenwände 17 auf. An den Seitenwänden 17 sind Haltenasen 25 angeordnet, um die seitlichen Dichtstreifen festzuklemmen.

Im Inneren des Halterahmens 10 ist ein Stützkreuz 26 angeordnet.

An den Seitenwänden 17 sowie an der Verschlußleiste 12 ist ein außen umlaufender Absatz 27 vorgesehen. Der in das Filtergehäuse eingesetzte Halterahmen 10 ist über zusätzliche, hier nicht dargestellte Maßnahmen gegenüber dem Filtergehäuse abgedichtet und fixiert. Auch kann entlang der Außenseite des Halterahmens ein flexibler Bund, beispielsweise in der Art einer Lippendichtung, vorgesehen sein, der fest, insbesondere einteilig, mit dem Halterahmen 10 verbunden ist und der eine Dichtfunktion übernimmt.

Neben der lösbaren Ausführung kann der Halterahmen in dem in den Fig. 3 bis 6 gezeigten Beispiel auch einteilig mit dem Filtergehäuse ausgebildet sein.

## Patentansprüche

1. Filtereinrichtung, insbesondere für einen Fahrzeugkabinen-Luftfilter, mit einem in einem Filtergehäuse (9) aufgenommenen Filterelement (1), das aus zick-zack-förmig gefaltetem Bahnenmaterial (2) besteht, wobei zumindest eine Längsseite (4) des Filterelements (1) von einem Dichtstreifen (6) abgedeckt ist, dessen eine Längskante (7) die Filterelement-Oberfläche (8) überragt,
**dadurch gekennzeichnet,**
**daß** im Filtergehäuse (9) ein Halterahmen (10) mit einer Aufnahmenut (11) vorgesehen ist, in die die überstehende Längskante (7) des Dichtstreifens (6) einsteckbar ist.

2. Filtereinrichtung nach Anspruch 1,
**dadurch gekennzeichnet,**
**daß** an zumindest einer Stirnseite (5) des Filterelements (1) ein Dichtstreifen (6) angeordnet ist, der in eine entsprechende Nut (15) in dem Halterahmen (10) eingreift.

3. Filtereinrichtung nach Anspruch 1 oder 2,
**dadurch gekennzeichnet,**
**daß** der Halterahmen (10) ein vom Filtergehäuse (9) lösbares Bauteil ist.

4. Filtereinrichtung nach Anspruch 1 oder 2,
**dadurch gekennzeichnet,**
**daß** der Halterahmen (10) einteilig mit dem Filtergehäuse (9) ausgebildet ist.

5. Filtereinrichtung nach Anspruch 4,
**dadurch gekennzeichnet,**
**daß** das Filterelement (1) nach Art einer Schublade in den Halterahmen (10) ein- und ausfahrbar ist.

6. Filtereinrichtung nach einem der Ansprüche 1 bis 5,
**dadurch gekennzeichnet,**
**daß** das Filterelement (1) durch einen Schnappverschluß unverlierbar im Filtergehäuse (9) gehalten ist.

7. Filtereinrichtung nach einem der Ansprüche 1 bis 6,
**dadurch gekennzeichnet,**
**daß** an zumindest einer Stirnseite (5) des Filterelements (1) eine Verschlußleiste (12) vorgesehen ist.

8. Filtereinrichtung nach Anspruch 7,
**dadurch gekennzeichnet,**
**daß** an der Verschlußleiste (12) ein Quersteg (13) angeformt ist, wobei zwischen der Wandung (14) der Verschlußleiste (12) und dem Quersteg (13) eine Nut (15) zur Aufnahme einer Filterfalte (3) des Filterelements (1) ausgebildet ist.

9. Filtereinrichtung nach Anspruch 7 oder 8,
**dadurch gekennzeichnet,**
**daß** zwischen der Verschlußleiste (12) und dem Halterahmen (10) eine Dichtung (16) angeordnet ist.

10. Filtereinrichtung nach einem der Ansprüche 7 bis 9,
**dadurch gekennzeichnet,**
**daß** die Verschlußleiste (12) einteilig mit dem Halterahmen (10) ausgebildet ist.

11. Filtereinrichtung nach einem der Ansprüche 7 bis 10,
**dadurch gekennzeichnet,**
**daß** die Verschlußleiste (12) aus einem biege- und torsionssteifen Kunststoff besteht.

12. Filtereinrichtung nach einem der Ansprüche 7 bis 11,
**dadurch gekennzeichnet,**
**daß** die Verschlußleiste (12) an zumindest einer Stirnseite (5) auf das Filterelement (1) aufsteckbar ist.

13. Filtereinrichtung nach einem der Ansprüche 7 bis 12,
**dadurch gekennzeichnet,**
**daß** die Verschlußleiste (12) an einer Stirnseite (5) mit dem Halterahmen (10) ein gemeinsames Bauteil bildet.

14. Filtereinrichtung nach einem der Ansprüche 1 bis 13,
**dadurch gekennzeichnet,**
**daß** der Halterahmen (10) das Filterelement (1) überragende Seitenwände (17) aufweist.

## Claims

1. A filter device, in particular for a vehicle compartment air filter, having a filter element (1) accommodated in a filter housing (9) and consisting of sheeting material (2) folded in a zigzag pattern, whereby at least one longitudinal side (4) of the filter element (1) is covered by a sealing strip (6) whose one longitudinal edge (7) projects above the filter element surface (8),
**characterized in that**
a retaining frame (10) is provided with a receiving groove (11) in the filter housing (9) so that the projecting longitudinal edge (7) of the sealing strip (6) is insertable into this groove.

2. The filter device according to Claim 1,
**characterized in that**
a sealing strip (6) is arranged on at least one end face (5) of the filter element (1), engaging in a corresponding groove (15) in the retaining frame (10).

3. The filter device according to Claim 1 or 2,
**characterized in that**
the retaining frame (10) is a component which is detachable from the filter housing (9).

4. The filter device according to Claim 1 or 2,
**characterized in that**
the retaining frame (10) is designed in one piece with the filter housing (9).

5. The filter device according to Claim 4,
**characterized in that**
the filter element (1) can be inserted into and pulled out of the retaining frame (10) in the manner of a drawer.

6. The filter device according one of Claims 1 through 5,
**characterized in that**
the filter element (1) is held by a snap closure in the filter housing (9) so that it cannot fall out.

7. The filter device according to one of Claims 1 through 6,
**characterized in that**
a sealing strip (12) is provided on at least one end face (5) of the filter element (1).

8. The filter device according to Claim 7,
**characterized in that**
a transverse web (13) is integrally molded on the sealing strip (12), whereby a groove (15) to accommodate a filter fold (3) of the filter element (1) is formed between the wall (14) of the sealing strip (12) and the transverse web (13).

9. The filter device according to Claim 7 or 8,
**characterized in that**
a gasket (16) is arranged between the sealing strip (12) and the retaining frame (10).

10. The filter device according to one of Claims 7 through 9,
**characterized in that**
the sealing strip (12) is designed in one piece with the retaining frame (10).

11. The filter device according to one of Claims 7 through 10,
**characterized in that**
the sealing strip (12) is made of a flexurally rigid and torsionally stiff plastic.

12. The filter device according to one of Claims 7 through 11,
**characterized in that**
the sealing strip (12) is attachable to the filter element (1) on at least one end face (5).

13. The filter device according to one of Claims 7 through 12,
**characterized in that**
the sealing strip (12) forms a common component with the retaining frame (10) on one end face (5).

14. The filter device according to one of Claims 1 through 13,
**characterized in that**
the retaining frame (10) has lateral walls (17) which project above the filter element (1).

## Revendications

1. Dispositif de filtration, en particulier pour un filtre à air de cabine de véhicule, comportant un élément filtrant (1) logé dans un boîtier de filtre (9), qui est constitué d'une matière de bande (2) pliée en zigzag, au moins un côté longitudinal (4) de l'élément filtrant (1) étant recouvert par une bande d'étanchéité (6) dont une arête longitudinale (7) déborde de la surface de l'élément filtrant (8),
**caractérisé en ce qu'**un châssis de retenue (10) comportant une rainure de positionnement (11), dans laquelle l'arête longitudinale débordante (7) de la bande d'étanchéité (6) est enfichable, est prévu dans le boîtier de filtre (9).

2. Dispositif de filtration selon la revendication 1,
**caractérisé en ce qu'**une bande d'étanchéité (6), qui s'engrène dans une rainure (15) correspondante du châssis de retenue (10), est disposée sur au moins un côté frontal (5) de l'élément filtrant (1).

3. Dispositif de filtration selon la revendication 1 ou 2,
**caractérisé en ce que** le châssis de retenue (10) est un composant détachable du boîtier de filtre (9).

4. Dispositif de filtration selon la revendication 1 ou 2,
**caractérisé en ce que** le châssis de retenue (10) est construit d'une seule pièce avec le boîtier de filtre (9).

5. Dispositif de filtration selon la revendication 4,
**caractérisé en ce que** l'élément filtrant (1) peut être rentré dans et sorti du châssis de retenue (10) à la manière d'un tiroir.

6. Dispositif de filtration selon l'une des revendications 1 à 5,
**caractérisé en ce que** l'élément filtrant (1) est retenu de manière imperdable dans le boîtier de filtre (9) par une fermeture à cliquet.

7. Dispositif de filtration selon l'une des revendications 1 à 6,
**caractérisé en ce qu'**une baguette de fermeture (12) est prévue sur au moins un côté frontal (5) de l'élément filtrant (1).

8. Dispositif de filtration selon la revendication 7,
**caractérisé en ce qu'**une nervure transversale (13) est formée sur la baguette de fermeture (12), une rainure (15) étant formée entre la paroi (14) de la baguette de fermeture (12) et la nervure transversale (13) pour le logement d'un pli de filtre (3) de l'élément filtrant (1).

9. Dispositif de filtration selon la revendication 7 ou 8,
**caractérisé en ce qu'**un joint (16) est disposé entre la baguette de fermeture (12) et le châssis de retenue (10).

10. Dispositif de filtration selon l'une des revendications 7 à 9,
**caractérisé en ce que** la baguette de fermeture (12) est formée d'une seule pièce avec le châssis de retenue (10).

11. Dispositif de filtration selon l'une des revendications 7 à 10,
**caractérisé en ce que** la baguette de fermeture (12) est constituée d'une matière plastique résistant à la flexion et à la torsion.

12. Dispositif de filtration selon l'une des revendications 7 à 11,
**caractérisé en ce que** la baguette de fermeture (12) est enfichable dans l'élément filtrant (1) sur au moins un côté frontal (5).

13. Dispositif de filtration selon l'une des revendications 7 à 12,
**caractérisé en ce que** la baguette de fermeture (12) forme un composant commun avec le châssis de retenue (10) sur un côté frontal (5).

14. Dispositif de filtration selon l'une des revendications 1 à 13,
**caractérisé en ce que** le châssis de retenue (10) présente des parois latérales (17) qui débordent de l'élément filtrant (1).
